# FASCICULE DE BREVET EUROPEEN

(11) **EP 3 237 737 B1**
(45) Date de publication et mention de la délivrance du brevet: **06.02.2019**
(21) Numéro de dépôt: 15828355.6
(22) Date de dépôt: 22.12.2015
(51) Int. Cl.: F02C 9/24, F02C 7/057, F02K 3/04, F02C 6/08, F01D 17/08, G01M 3/28, F02C 7/047, F02C 7/277

(54) **PROCÉDÉ DE DÉTECTION DE FUITE DE FLUIDE DANS UNE TURBOMACHINE ET SYSTÈME DE DISTRIBUTION DE FLUIDE**
VERFAHREN ZUR ERKENNUNG VON FLÜSSIGKEITSLECKS IN EINER TURBOMASCHINE UND FLÜSSIGKEITSVERTEILUNGSSYSTEM
METHOD FOR DETECTING A FLUID LEAK IN A TURBOMACHINE AND FLUID DISTRIBUTION SYSTEM

(30) Priorité: 24.12.2014 FR 1463331
(43) Date de publication de la demande: 01.11.2017
(73) Titulaire: SAFRAN AIRCRAFT ENGINES, 75015 Paris (FR)
(72) Inventeur: EVERWYN, Alexandre, Patrick, Jacques, Roger, 77550 Moissy Cramayel (FR); RODHAIN, Arnaud, 77550 Moissy Cramayel (FR)
(74) Mandataire: Brevalex
(86) Numéro de dépôt international: PCT/FR2015/053704
(87) Numéro de publication internationale: WO 2016/102878

(56) Documents cités:
- EP-A1- 0 205 283
- GB-A- 2 259 679
- US-B2- 7 930 928

## Description

### DOMAINE TECHNIQUE

L'invention se rapporte au domaine des turbomachines pour aéronefs et notamment au domaine des systèmes de distribution de fluide équipant de telles turbomachines. Par turbomachine, on entend dans la présente tout ensemble propulsif à turbine. L'ensemble propulsif ne se limite pas au moteur en lui-même, et peut comprendre notamment une nacelle.

### ÉTAT DE LA TECHNIQUE ANTÉRIEURE

Les systèmes de distribution de fluide notamment pressurisé dans les turbomachines font généralement appel à un nombre important de canalisations dont certaines peuvent être disposées au moins en partie dans des compartiments sensibles des turbomachines.

Ainsi, en raison de la température généralement élevée de ces fluides pressurisés, la moindre fuite d'une canalisation dans l'un de ces compartiments sensibles de la turbomachine peut être problématique et endommager la turbomachine. Cela est notamment le cas pour le circuit de dégivrage nacelle (plus connu sous son sigle anglais NAI pour Nacelle Anti Icing) et le circuit d'alimentation en air pressurisé du démarreur, qui sont en partie logée dans un compartiment de soufflante (appelé en anglais zone fan) situé radialement à l'extérieur du carter de soufflante de la turbomachine et à l'intérieur de la nacelle. Plus précisément, le compartiment de soufflante est situé radialement à l'intérieur d'un capot de nacelle.

En effet, la soufflante d'une turbomachine, et plus particulièrement le compartiment de soufflante, peuvent comporter des éléments en matériau(x) composite(s) à faible tenue en température. Or une fuite dans le compartiment de soufflante de l'air pressurisé passant dans le circuit NAI peut entraîner une forte augmentation de la température dans ce compartiment qui est susceptible de dépasser les 350°C. À ces températures, lesdits éléments en matériau(x) composite(s) ne peuvent garder leur intégrité que sur un laps de temps relativement court, typiquement de l'ordre de 15s.

Pour ces raisons, il est donc nécessaire de mettre en place des procédés de détection de fuite de fluide.

Il est connu du document US 7930928 d'installer des capteurs de température dans les compartiments sensibles. Ces capteurs de température permettent la mise en place d'un procédé de surveillance de fluide dans ces compartiments sensibles en détectant toute élévation anormale de température. Une telle surveillance de la température autorise donc la détection d'un apport inhabituel de fluides à température élevée dans le compartiment sensible qui ne peut provenir que d'une fuite de fluide à haute température.

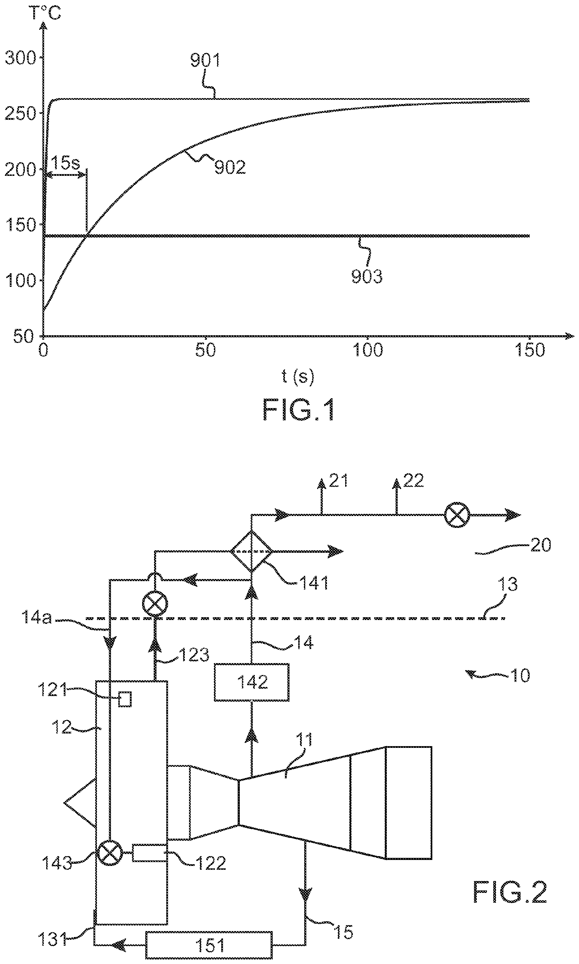

Ainsi, un tel procédé de détection de fuite permet de détecter les fuites de fluide à haute température quels que soient l'origine de ces fuites et le nombre de canalisations susceptibles de fuir. Néanmoins, comme le montre la figure 1, les capteurs de température utilisés présentent une certaine inertie. En effet la figure 1 est un graphique représentant la température 901 réelle dans le compartiment lors d'une simulation de fuite de fluide mise en parallèle avec la température 902 mesurée par le capteur de température. Ainsi, alors que la fuite de fluide a pour conséquence une élévation de température dans le compartiment quasi instantanée (la durée totale de la montée en température est inférieure à 5s), le capteur de température montre une élévation de température beaucoup moins rapide (celle-ci est de l'ordre de 130-140s) puisque ce capteur agit sur la température ambiante comme un filtre passe bas ayant une constante de temps élevée. Par exemple, pour une température seuil de 120°C, considérée comme critique pour des éléments en matériau(x) composite(s) à faible tenue en température, il faut près de 15s pour la détecter alors qu'elle est atteinte dans le compartiment en moins d'une seconde. Si l'on ajoute à ce délai un délai de latence typiquement de 8s pour traiter l'information et pour que l'unité de traitement de la turbomachine ferme les vannes de la canalisation du système de distribution de fluide, il en résulte que les éléments en matériau(x) composite(s) sont soumis à cette température critique pendant un temps de près de 23s. On peut également ajouter que les délais donnés ici concernent un capteur de température en vis-à-vis de la fuite, et qu'un capteur positionné à distance de l'emplacement de la fuite peut ajouter un délai supplémentaire de quelques secondes.

Ce temps ne devant idéalement pas dépasser 15s pour sauvegarder l'intégrité des éléments en matériau(x) composite(s), il est nécessaire de réduire le temps de détection, par exemple à moins de 7s si délai de latence est de 8s et ceci quel que soit l'emplacement de la fuite vis-à-vis du capteur.

Cette problématique est particulièrement présente pour le système de distribution de fluide qui comporte la canalisation d'alimentation en air pressurisé et à haute température à la fois de l'aéronef et du démarreur de la turbomachine et la canalisation d'alimentation en air du circuit NAI. En effet, ces canalisations présentent des conduites qui sont typiquement logées dans le compartiment de soufflante de la turbomachine, ceci notamment pour l'alimentation en air pressurisé du démarreur et du circuit de dégivrage du manche d'entrée. Or, comme déjà indiqué, le compartiment de soufflante est particulièrement sensible en raison des éléments en matériau(x) composite(s) qu'il contient. Il est donc particulièrement important qu'un tel système de distribution d'air pressurisé à haute température permette la détection de fuite d'air à haute température dans le compartiment de soufflante ceci quelle que soit l'ampleur de la fuite de fluide. Des systèmes de distribution de fluide et des procédés de détection de fuite sont également connus par les documents EP0205283A1 et GB2259679A.

### EXPOSÉ DE L'INVENTION

L'invention a pour objet de remédier à cet inconvénient et a donc pour but de fournir un procédé de détection de fuite de fluide à haute température dans une turbomachine qui permettent la détection d'une fuite de fluide à haute température dans un compartiment de la turbomachine avec un délai de détection réduit vis-à-vis de l'art antérieur et qui présente peu de dépendance vis-à-vis du positionnement du système de mesure dans le compartiment de turbomachine, ce procédé de détection devant permettre aussi bien une détection de fuite de fluide de faible débit, telle que celle correspondant à une fissuration d'une canalisation, qu'une détection de fuite de fluide de débit important, telle que celle correspondant à un désemmanchement d'une canalisation.

A cet effet, l'invention concerne un procédé de détection de fuite de fluide à haute température dans une turbomachine d'aéronef, ladite turbomachine comportant :
- une source de fluide à haute température pressurisé,
- au moins une canalisation de distribution du fluide adapté pour distribuer ledit fluide à haute température à différentes parties de la turbomachine et/ou de l'aéronef qui est destiné à être équipé de ladite turbomachine,
- un compartiment de turbomachine dans lequel la canalisation de distribution est au moins en partie logée, ledit compartiment présentant en fonctionnement une pression inférieure à celle du fluide à haute température,
le procédé comportant les étapes suivantes :
- mesure d'au moins un paramètre de la pression du compartiment de turbomachine,
- détection d'une fuite de fluide à haute température lorsque le paramètre de la pression du compartiment de turbomachine atteint une valeur seuil caractéristique d'une fuite de fluide à haute température dans le compartiment.

Plus précisément, l'invention concerne un procédé comportant les étapes suivantes de :
- mesure d'au moins deux paramètres de la pression du compartiment de turbomachine dont une pression mesurée et une variation temporelle de pression,
- détection d'une fuite de fluide à haute température lorsqu'au moins l'un des deux paramètres de la pression du compartiment de turbomachine atteint une valeur seuil caractéristique d'une fuite de fluide à haute température dans le compartiment.

On définit la pression du compartiment de turbomachine comme la pression du gaz, généralement de l'air, régnant à l'intérieur du compartiment. Par paramètre de la pression du compartiment, on entend une grandeur mesurée représentative de la pression instantanée, c'est-à-dire que la grandeur mesurée à un instant donné représente assez fidèlement la pression au même instant. A contrario, comme expliqué dans ce qui précède, la température mesurée à l'intérieur du compartiment n'est pas représentative de la pression instantanée du fait notamment de l'inertie des capteurs de température, et ne constitue donc pas un paramètre de la pression du compartiment.

Avec un tel procédé il est possible de détecter une fuite de fluide à haute température dans le compartiment dans un délai bien inférieur à celui d'une simple détection par seuil de température. En effet, l'apport de fluide dans le compartiment lors d'une fuite engendre généralement une augmentation de pression dans le compartiment qui est répartie sur tout le volume du compartiment alors que la montée de température reste localisée, dans un premier temps, au niveau de la fuite. De plus, les capteurs de pression ne présentent pas les problèmes d'inertie des capteurs de température et permettent donc de détecter dès l'apparition de la fuite l'élévation de pression qui en résulte.

Ainsi, avec ce procédé de détection, il est possible de détecter l'apparition d'une fuite de fluide à haute température dans le compartiment avec un délai de détection bien inférieur à celui d'un procédé de l'art antérieur ceci quelle que soit l'emplacement de la fuite dans le compartiment.

On notera de plus, qu'un tel procédé est adapté pour détecter les fuites de fluide quel que soit le débit de ces fuites. En effet, la mesure de deux paramètres, dont une pression mesurée et une variation temporelle de pression, permet de détecter les fuites de fluide à fort débit qui seront détectées rapidement par la mesure de la variation temporelle, alors que la pression mesurée permet de détecter les fuites de fluide à faible débit, compte tenu que ces dernières ne pourraient pas être détectées par la mesure de la variation temporelle. De cette manière, on assure une détection de fuites de fluide rapidement quel que soit leur débit.

On entend ci-dessus et dans le reste de ce document par température basse relativement à la haute température que la différence de température entre le fluide à haute température fourni par la source de fluide et la température régnant dans le compartiment est supérieure à 50°C et préférentiellement à 100°C.

On entend ci-dessus et dans le reste de ce document par fluide pressurisé, un fluide dont la pression est supérieure ou égale à 0,2 MPa voire 4 MPa. La pression dans le compartiment sera généralement faible vis-à-vis de de celle du fluide pressurisé, c'est-à-dire qu'elle sera au moins 2 fois, voire 4 fois, inférieure à celle d'un fluide pressurisé à haute température.

Par « atteindre », il faut bien entendu entendre que le paramètre de pression devient égal ou supérieur à la valeur seuil.

La pression mesurée peut être une pression mesurée sélectionnée dans le groupe comportant une pression absolue du compartiment de turbomachine, une pression relative du compartiment de turbomachine par rapport à la pression atmosphérique et une pression différentielle représentative de la différence entre la pression de l'air dans le compartiment et la pression d'un gaz dans une zone de référence. La détection d'une fuite peut avoir lieu lorsque la pression mesurée dans le compartiment de turbomachine atteint une valeur seuil de pression caractéristique d'une fuite de fluide à haute température dans le compartiment.

Un tel paramètre de la pression permet d'obtenir une détection de fuite efficace puisqu'il permet une détection de fuite de fluide pressurisé de faible intensité qui engendre une augmentation de pression, et donc de température, graduelle.

La détection d'une fuite peut avoir lieu lorsque la variation temporelle de pression dans le compartiment de turbomachine atteint une valeur seuil de variation caractéristique d'une fuite de fluide à haute température dans le compartiment.

Un tel paramètre est particulièrement adapté pour permettre une détection rapide d'une fuite de forte intensité. En effet, une telle fuite engendre une augmentation rapide de la pression dans le compartiment et donc une variation forte. Ainsi, la détection peut avoir lieu alors même que la pression n'a pas encore atteinte une valeur caractéristique d'une fuite de fluide à haute température.

La variation temporelle de pression peut être un gradient, dP/dt, ou encore une différence de pression, ΔP, entre deux instants donnés.

Lors de l'étape de mesure il peut être mesuré deux paramètres : la pression mesurée et la variation temporelle de pression dans le compartiment de turbomachine. La détection d'une fuite peut avoir lieu lorsqu'au moins l'une parmi la pression mesurée et la variation temporelle de pression dans le compartiment atteint une valeur seuil respective.

Un tel procédé permet d'obtenir une détection de fuite de fluide à haute température rapide pour les fuites importantes, telles que celles liées à un désemmanchement d'une canalisation, tout en permettant de détecter les fuites de fluide à haute température moins importantes, telles que celles liées à une fissuration d'une canalisation.

En fonctionnement de la turbomachine, ledit compartiment peut être isolé de façon étanche par rapport au fluide distribué par l'au moins canalisation de distribution du fluide.

Un tel procédé est particulièrement avantageux pour un tel compartiment. Le compartiment étant isolé de façon étanche par rapport au fluide haute température, il n'est pas nécessairement configuré pour supporter les hautes températures, ce qui est le cas notamment quand le compartiment comprend au moins un élément en matériau(x) composite(s). Il est donc d'autant plus important de prévenir toute fuite de fluide.

Le procédé étant destiné à être mis en oeuvre sur un aéronef comportant au moins une deuxième turbomachine, ledit au moins un paramètre de la pression du compartiment peut être issu d'une comparaison de pression vis-à-vis de la deuxième turbomachine, la détection de fuite ayant lieu lorsqu'il résulte de la comparaison que la pression dans le compartiment devient supérieure d'une valeur seuil à celle d'un compartiment de la deuxième turbomachine, ladite valeur seuil étant caractéristique d'une fuite de fluide à haute température dans le compartiment de la première turbomachine.

Un tel procédé en jouant sur la redondance des turbomachines équipant un aéronef, permet d'utiliser des seuils de différences de pression relativement faibles et ainsi détecter rapidement une sortie de la turbomachine de son état normal qui est représenté par l'autre turbomachine. On obtient ainsi une détection efficace aussi bien pour les fuites importantes que pour les fuites plus réduites.

Le procédé peut comprendre une étape supplémentaire de :
- fermeture de ladite au moins une canalisation de distribution du fluide si une fuite est détectée.

Une telle étape permet de stopper la fuite de fluide pressurisé à haute température dans le compartiment lorsqu'une telle fuite a été détectée. Ceci permet de préserver les éléments fragiles du compartiment, tels que les éléments en matériaux composites, vis-à-vis de la haute température.

Le compartiment de turbomachine est situé radialement entre un carter de soufflante et un capot d'une nacelle de la turbomachine.

Le fluide à haute température peut être de l'air issu d'un compresseur de la turbomachine, la turbomachine comportant une première et une deuxième canalisation de distribution du fluide, la première canalisation étant une canalisation pour distribuer l'air à l'aéronef et à un démarreur de la turbomachine, la deuxième canalisation étant une canalisation pour distribuer l'air au niveau d'un manche d'entrée d'air de la turbomachine afin d'alimenter un système de dégivrage, la première et la deuxième canalisation étant au moins en partie logées dans le compartiment.

Le procédé de l'invention est particulièrement adapté pour la détection de fuite dans un tel compartiment et pour permettre de détecter les fuites de telles canalisations de distribution de fluide. En effet, le compartiment situé radialement entre un carter de soufflante et un capot d'une nacelle de la turbomachine comporte des éléments en matériau composite qui est particulièrement sensible aux fuites qui pourraient survenir sur la canalisation pour distribuer l'air à l'aéronef et à un démarreur de la turbomachine et sur la canalisation pour distribuer l'air au niveau d'un manche d'entrée d'air de la turbomachine afin d'alimenter un système de dégivrage.

L'invention concerne également un système de distribution de fluide à haute température pour turbomachine d'aéronef, le système comportant :
- une source de fluide à haute température pressurisé,
- au moins une canalisation de distribution du fluide à haute température adaptée pour distribuer ledit fluide à différentes parties de la turbomachine et/ou de l'aéronef qui est destiné à être équipé de ladite turbomachine,
- un compartiment de turbomachine dans lequel la canalisation de distribution est au moins en partie logée, ledit compartiment présentant en fonctionnement de la turbomachine une pression inférieure à celle du fluide à haute température,
- au moins un moyen de mesure adapté pour permettre la mesure d'un paramètre de la pression du compartiment de la turbomachine,
- une unité de traitement agencée pour commander le moyen de mesure d'un paramètre de la pression du compartiment de la turbomachine,
l'unité de traitement est configurée pour détecter une fuite de fluide à haute température lorsque le paramètre de la pression du compartiment obtenu à partir du moyen de mesure atteint une valeur seuil caractéristique d'une fuite de fluide à haute température dans le compartiment.

Plus précisément, l'au moins un moyen de mesure est adapté pour permettre la mesure d'au moins deux paramètres de la pression du compartiment de la turbomachine dont une pression mesurée et une variation temporelle de pression,
l'unité de traitement est agencée pour recevoir des données de mesures réalisées par le moyen de mesure,
et l'unité de traitement est configurée pour détecter une fuite fluide à haute température lorsqu'au moins l'un des deux paramètres de la pression du compartiment obtenus à partir du moyen de mesure atteint une valeur seuil caractéristique d'une fuite de fluide à haute température dans le compartiment.

Un tel système permet la mise en oeuvre d'un procédé de détection de fuite selon l'invention et bénéficie donc des avantages liés au procédé selon l'invention.

Le compartiment peut être isolé de façon étanche par rapport au fluide distribué par l'au moins une canalisation qui y est au moins en partie logée, et peut présenter un volume intérieur qui est supérieur à deux fois le volume total de la partie de l'au moins une canalisation qui est logée dans le compartiment.

Par volume intérieur d'un compartiment, il doit être entendu, ici et dans le reste de ce document, le volume délimité par les parois internes du compartiment, celui incluant le volume occupé par les éléments contenus dans ledit volume intérieur, tels que le volume occupé par la partie de l'au moins une canalisation qui est logée dans le compartiment.

Ledit compartiment peut être fermé et renfermer un volume d'air qui est supérieur à deux fois le volume total de la partie de l'au moins une canalisation qui est logée dans le compartiment.

Par volume d'air renfermé dans le compartiment, il doit être entendu ici et dans le reste de ce document, le volume intérieur du compartiment contenant de l'air, c'est-à-dire qui n'est occupé par un élément contenu dans le volume intérieur tel que la partie de l'au moins une canalisation qui est logée dans le compartiment.

Ledit compartiment peut comprendre au moins un élément en matériau(x) composite(s) à tenue en température insuffisante pour supporter la haute température du fluide au-delà d'un délai prédéterminé inférieur à 30 secondes.

Ledit élément en matériau(x) composite(s) peut être constitué par une paroi du compartiment adjacente à un volume d'air dans lequel passe l'au moins une canalisation de distribution du fluide à haute température.

Un tel système de distribution est particulièrement adapté pour protéger l'élément en matériau(x) composite(s) en cas de fuite de fluide à haute température, puisque la détection de la fuite pourra être réalisée dans un temps bien inférieur à 30 secondes.

L'invention concerne également une turbomachine comportant un système de distribution de fluide selon l'invention.

Une telle turbomachine, en permettant la mise en oeuvre d'un procédé selon l'invention, bénéficie des avantages qui y sont liés.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est un graphique représentant la variation de la température dans un compartiment de soufflante d'une turbomachine lors d'une fuite d'air pressurisé à haute température mis en parallèle avec la température mesurée par un capteur de température du même compartiment de soufflante,
- la figure 2 illustre schématiquement un circuit de distribution de fluide d'une turbomachine,
- La figure 3 est un graphique représentant la montée en pression dans le comportement de soufflante d'une turbomachine lors d'une fuite dans la canalisation NAI de faible intensité,
- La figure 4 est un graphique représentant la montée en pression dans le compartiment de soufflante d'une turbomachine lors d'une fuite dans la canalisation d'alimentation en air pressurisé du démarreur de faible intensité avec à 300ms une ouverture de la trappe de limitation de la pression.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

La figure 2 illustre schématiquement un exemple de système de distribution de fluide à haute température pressurisé, plus précisément d'air pressurisé, selon l'invention équipant une turbomachine 10. Ladite turbomachine équipe un aéronef.

Un tel système de distribution de fluide comporte :
- un compresseur haute pression 11 formant une source d'air pressurisé à haute température,
- une soufflante présentant un carter 12 qui délimite intérieurement une veine de flux secondaire et à l'extérieur duquel sont installés un capteur de pression 121 pour mesurer la pression dans un compartiment de soufflante,
- une nacelle 13 de la turbomachine comprenant un manche d'entrée 131 de la turbomachine pour l'admission d'air dans cette dernière,
- une première canalisation 14 haute pression pour prélever de l'air pressurisé à haute température à partir du compresseur haute pression à destination de l'aéronef, ladite première canalisation comportant une branche secondaire 14a pour alimenter en air pressurisé un démarreur 122 de la turbomachine,
- une deuxième canalisation 15 de dégivrage de la nacelle 13 et du manche d'entrée 131 de la turbomachine 10,
- un calculateur moteur connu pour son sigle anglais FADEC pour « Full Authority Digital Engine Control », non représenté.

Le compartiment de soufflante est situé radialement entre le carter de soufflante 12 et un capot d'une nacelle 13 de la turbomachine. Il comporte généralement des éléments en matériau(x) composite(s) sensible(s) à la haute température. Le compartiment de soufflante 12, également appelé parfois « zone fan » en anglais, est donc un compartiment sensible de la turbomachine dans lequel il est important de détecter une éventuelle fuite de fluide à haute température, tel que l'air pressurisé fourni par le compresseur haute pression 11. En effet, ces éléments en matériau(x) composite(s) présentent généralement une tenue en température insuffisante pour supporter la haute température du fluide au-delà d'un délai prédéterminé inférieur à 30 secondes, voire inférieure ou égal à 15 secondes.

Classiquement, la pression de l'air dans le compartiment de soufflante est comprise entre 0,02 et 0,14 MPa.Le compartiment de soufflante est isolé de façon étanche par rapport au fluide distribué la première et la deuxième canalisation. Son volume intérieur le volume de gaz qu'il contient sont tous les deux supérieurs au volume total des parties des première et deuxième canalisations 14, 15 qui sont logées dans la soufflante 12.

Le compresseur haute pression 11 permet d'alimenter la première et la deuxième canalisation 14, 15 avec de l'air pressurisé à haute température pouvant atteindre typiquement 500°C.

La première canalisation 14 est agencée pour prélever de l'air pressurisé du compresseur haute pression 11 afin d'alimenter l'aéronef en air pressurisé à destination notamment des systèmes de conditionnement d'air 21 de l'aéronef et de dégivrage des ailes 22 de l'aéronef.

En amont d'un échangeur thermique 141 permettant de refroidir l'air pressurisé à partir d'air prélevé dans la soufflante (à partir de la canalisation référencée 123 sur la figure 2), la première canalisation 14 comporte une canalisation secondaire 14a à destination du démarreur 122. Ainsi la première canalisation 14 permet d'alimenter le démarreur 122 se trouvant en zone centrale du moteur avec de l'air pressurisé dont la température est typiquement de l'ordre de 360°C. La pression dans la canalisation secondaire 14a de la première canalisation 14 est généralement comprise entre 0,3 et 10 MPa.

La première canalisation 14 comporte des premières vannes 142, typiquement des vannes dites ECS (sigle anglais signifiant : Environmental Control System, c'est-à-dire de système de commande environnementale) pour réguler les débits d'air prélevés au compresseur haute pression 11.

La deuxième canalisation 15 permet d'alimenter le circuit de dégivrage du manche d'entrée d'air 131 de la nacelle 13. La deuxième canalisation 15 comporte des deuxièmes vannes 151 pour réguler le débit de l'air prélevé au compresseur haute pression 11. Typiquement la deuxième canalisation 15 permet d'alimenter le circuit de dégivrage du manche d'entrée d'air 131 avec un air pressurisé d'une température de l'ordre de 500°C. La pression de l'air circulant dans cette deuxième canalisation 15 est généralement comprise entre 2 et 3 MPa.

Que ce soit la première ou la deuxième canalisation 14, 15, une partie de leurs conduites respectives sont logées dans le compartiment de soufflante. Ainsi, en cas de fuite de l'une de ces conduites dans le compartiment de soufflante, cela engendre un apport d'air pressurisé à haute température et donc une montée en température dans le compartiment. Une telle montée en température est préjudiciable pour certains éléments en matériau(x) composite(s) pouvant se trouver dans le compartiment de soufflante.

Afin de permettre une détection de telles fuites, le compartiment de soufflante comprend un capteur de pression 121 qui, pour détecter toute élévation de pression qu'entraînerait une fuite d'air chaud dans le compartiment de soufflante. Dans une configuration usuelle, ce capteur de pression 121 peut être un capteur de pression présent dans le compartiment des turbomachines de l'art antérieur, tel que le capteur de pression connu sous sa dénomination anglaise Pressure SubSystem, c'est-à-dire le « sous-système de pression ».

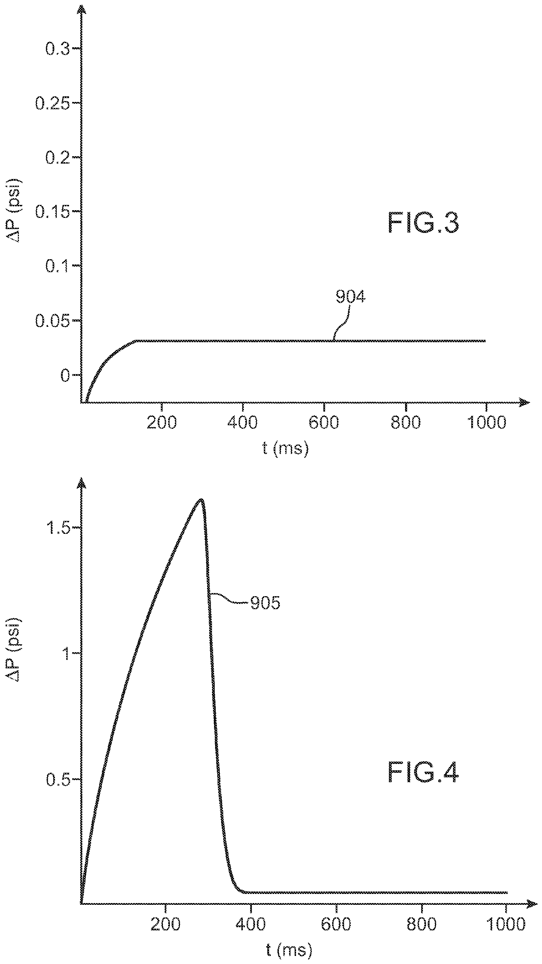

Les figures 3 et 4 illustrent ainsi la montée en pression dans le compartiment de soufflante mesurée par un tel capteur de pression 121 lors d'une rupture de conduite de respectivement la première canalisation et la deuxième canalisation 14, 15. Il est important, ici, d'attirer l'attention sur la différence d'échelle des abscisses entre la figure 1 et les figures 3 et 4. L'échelle de la figure 1 est en secondes, la température mesurée 901 mettant prêt de 150 s pour atteindre la valeur maximale, alors que l'échelle des figures 3 et 4 est en millisecondes, la variation de pression mesurée 904, 905 mettant dans les deux cas moins de 400 ms pour atteindre sa valeur maximale. Ceci démontre qu'une surveillance de la pression dans le compartiment de soufflante permet d'obtenir une détection de fuite bien plus rapide qu'avec une surveillance de température. Une détection de fuite basée sur une telle mesure de pression autorise donc une détection suffisamment rapide pour permettre d'effectuer les opérations nécessaires pour fermer la canalisation fuyant de manière à ce que les éléments en matériau(x) composite(s) ne soient pas soumis à une température critique pendant un temps supérieur à 23 s.

La figure 3 illustre plus précisément la montée en pression dans le compartiment de soufflante lors d'une rupture de conduite de la première canalisation 14, la variation de pression étant une pression différentielle exprimée en psi, c'est-à-dire l'unité anglaise de pression « pound-force per square inch », 1 psi état égal à environ 6900 Pa. Ainsi, lors de la rupture de la première conduite 14, celle alimentant le démarreur, la pression augmente de près de 0,05 psi, c'est-à-dire de 345 Pa, sur un temps bien inférieur à 200 ms.

La figure 4 montre que l'augmentation de pression est plus importante lors de la rupture d'une conduite la deuxième canalisation 15, celle alimentant en gaz pressurisé le circuit de dégivrage du manche d'entrée d'air 131. En effet, lors d'une telle rupture de conduite la pression différentielle dans le compartiment de soufflante peut dépasser 1,5 psi, c'est-à-dire dépasser 10000 Pa. Pour être plus précis, La pression du compartiment de soufflante lors d'une telle rupture atteint, comme le montre la baisse soudaine de pression un peu avant 400 ms, la valeur seuil du panneau limiteur de pression à partir de laquelle s'ouvre ledit panneau. On observe ainsi, cette valeur seuil atteinte, que l'ouverture du panneau limiteur de pression entraine une réduction de la pression qui devient de l'ordre de 0,1 psi, c'est-à-dire 690 Pa.

Le capteur de pression 121 est en communication avec le calculateur moteur.

Pour permettre de détecter une fuite d'air pressurisé à haute température dans le compartiment de soufflante, le calculateur moteur est configuré pour mettre une oeuvre un procédé comprenant les étapes suivantes :
- mesure de la pression dans le compartiment de soufflante à partir du capteur de pression 121 ceci afin de déterminer au moins un paramètre de la pression tel que la valeur de la pression mesurée, la variation temporelle de la pression, une différence de pression vis-à-vis d'une pression d'un autre élément de la turbomachine ou dans le compartiment de soufflante d'une autre turbomachine,
- détection d'une fuite d'air pressurisé à haute température si au moins un paramètre de la pression atteint, c'est-à-dire est supérieur ou égal à, une valeur seuil caractéristique d'une fuite d'air pressurisé à haute température dans le compartiment.

Ainsi, selon une première possibilité de l'invention, le paramètre peut être la valeur de pression mesurée et une fuite de fluide haute température est donc détectée si la valeur de pression mesurée dépasse une valeur seuil prédéfinie. Cette valeur seuil prédéfinie est une valeur choisie comme étant caractéristique d'une fuite de fluide pressurisé à haute température dans le compartiment de soufflante.

Selon cette possibilité, deux configurations du calculateur moteur sont envisageables, soit la valeur seuil est une valeur fixe choisie de manière à permettre une détection de fuite quel que soit l'état de la turbomachine, soit la valeur seuil est une variable adoptant des valeurs déterminées en fonction de paramètres mesurés représentatifs de l'état de la turbomachine. La première configuration est à préférer dans le cadre d'une mise en oeuvre simple de la détection de fuite. Dans cette première configuration, la valeur seuil peut, par exemple, être fixée à 0,2 MPa.

La deuxième configuration est à préférer pour une détection plus rapide. En effet avec une telle deuxième configuration, la valeur seuil peut être adaptée en fonction de l'état de la turbomachine et non fixée vis-à-vis de l'état de la turbomachine dans lequel la pression dans le compartiment de soufflante est la plus haute. Quelle que soit la configuration retenue, une telle première possibilité est particulièrement adaptée pour détecter les fuites de fluide pressurisé de faible intensité, telle que celle qui peut se créer en cas de fissuration d'une canalisation.

Selon une deuxième possibilité de l'invention, le paramètre peut être la variation temporelle de pression entre deux instants donnés, tel qu'un gradient, dP/dt, ou une différence de pression, ΔP. Selon cette possibilité la valeur seuil est donc une variation de pression seuil du même type. Cette deuxième possibilité utilise la forte élévation de pression qu'engendre l'apport de fluide pressurisé par la fuite dans le compartiment de soufflante. De même que pour la première possibilité de l'invention, le calculateur moteur peut avoir deux configurations dans lesquelles la valeur seuil est respectivement une valeur seuil fixe ou variable. Les avantages respectifs de ces deux configurations sont identiques à ceux exposés pour la première possibilité. Cette deuxième possibilité est particulièrement adaptée pour détecter rapidement une fuite de fluide forte intensité, telle que celle qui peut se créer lors du désemmanchement d'une canalisation. Selon cette deuxième possibilité, en considérant que la variation temporelle de pression est un gradient de pression déterminé entre deux instants, une valeur seuil de gradient de pression fixée entre 200 et 3000 Pa.s⁻¹, et préférentiellement égale à 500 Pa.s⁻¹, convient.

Selon la troisième possibilité, le paramètre peut être une différence de pression entre la pression dans le compartiment de soufflante et la même pression dans le compartiment de soufflante d'une autre turbomachine, telle qu'une deuxième turbomachine, équipant l'aéronef. Une telle différence est issue de la comparaison entre la pression dans le compartiment de soufflante et celle du compartiment de soufflante de l'autre turbomachine. Ainsi, dans la mesure où la turbomachine et l'autre turbomachine des phases de fonctionnent en parallèle et présentent donc des paramètres de fonctionnement similaires, une pression plus importante dans le compartiment de soufflante dans l'une par rapport à celui de l'autre turbomachine permet d'identifier un apport de fluide pressurisé et donc la présence d'une fuite de fluide pressurisé. La valeur seuil caractéristique correspond selon cette possibilité à une différence de pression caractéristique d'une fuite.

Dans le cadre de cette troisième possibilité, afin de s'assurer d'une détection de fuite fiable, le calculateur moteur peut être configuré pour rendre active la détection uniquement dans les phases de fonctionnement de la turbomachine dans lesquelles elle fonctionne en parallèle de l'autre turbomachine avec des paramètres de fonctionnement sensiblement identiques. Ainsi, par exemple, le calculateur moteur peut être configuré pour ne pas mettre en oeuvre la détection de fluide lors de la phase de démarrage de la turbomachine dans laquelle la pression dans le compartiment de soufflante est particulièrement important ce qui peut engendrer un déséquilibre entre les deux turbomachines.

Le calculateur moteur peut être configuré pour mettre en oeuvre une seule des trois possibilités ci-dessus, plusieurs de ces possibilités de manière simultanée ou encore mettre en oeuvre plusieurs de ces possibilités de manière successive et en fonction de l'état de fonctionnement de la turbomachine.

De même, en fonction de la possibilité sélectionnée parmi les trois possibilités ci-dessus, le calculateur moteur peut être configuré pour inhiber la détection de fuite pendant certaines phases de fonctionnement de la turbomachine dans lesquelles le paramètre de la pression du compartiment de soufflante est connu pour dépasser la valeur seuil caractéristique d'une fuite. Une telle configuration permet de fixer une valeur seuil faible pour permettre une détection rapide dans les cas où le risque de fuite est plus important tout en évitant les détections « faux-positif » que pourraient créer les phases de fonctionnement mentionnées ci-dessus.

De même, le principe de détection selon l'invention n'est pas incompatible avec les procédés de détection de fuite selon l'art antérieur, notamment celui décrit dans le document US 7930928. Ainsi, le calculateur moteur peut parfaitement être configuré pour mettre en oeuvre, en parallèle et/ou par alternance, une détection de fuite selon l'une quelconque des possibilités mentionnées basée sur une mesure de pression et une détection selon l'art antérieur basée sur une mesure de température.

Le calculateur moteur est également configuré pour, lorsqu'une fuite d'air pressurisé est détectée, fermer les canalisations susceptibles d'en être à l'origine. En plus de cette fermeture des premières et deuxièmes vannes, le calculateur moteur peut également être configuré pour alors transmettre un code d'erreur à l'aéronef de manière à indiquer qu'une panne vient de survenir.

L'aéronef peut ainsi, lors de la réception du code erreur, fermer la vanne ECS et transmettre le message d'erreur au pilote pour que ce dernier puisse :
- sortir des conditions de vol dans lesquelles il y a un risque d'apparition de givre, les capacités de dégivrage nacelle étant perdues,
- et éviter d'utiliser la valve d'alimentation du démarreur.

Ceci permet d'éviter les conséquences néfastes que pourrait avoir une fuite de fluide à haute température dans le compartiment soufflante.

Avec une telle configuration, le calculateur moteur forme une unité de traitement configurée pour fournir à partir des capteurs de pression 121 une mesure d'un paramètre de la pression du compartiment de soufflante, et pour détecter une fuite de fluide si le paramètre de la pression du compartiment est supérieur ou égal à une valeur seuil. Selon une variante préférée de l'invention, le calculateur moteur peut être configuré pour détecter une fuite de fluide si le paramètre de la pression est strictement supérieur à la valeur seuil caractéristique d'une fuite.

Il est à noter que si dans le mode de réalisation décrit ci-dessus, le procédé de détection de fuite permet une détection de fuite d'air pressurisé dans le compartiment de soufflante de la turbomachine, il peut être adapté pour la détection de fuite dans un autre compartiment sensible de la turbomachine.

## Revendications

1. Procédé de détection de fuite de fluide à haute température dans une turbomachine (10) d'aéronef, ladite turbomachine (10) comportant :
- une source de fluide à haute température pressurisé,
- au moins une canalisation (14, 15) de distribution du fluide adaptée pour distribuer ledit fluide à haute température à différentes parties de la turbomachine (10) et/ou de l'aéronef (20) qui est destiné à être équipé de ladite turbomachine (10),
- un compartiment de turbomachine (10) dans lequel la canalisation (14, 15) de distribution est au moins en partie logée, ledit compartiment présentant en fonctionnement une pression inférieure à celle du fluide à haute température,
le procédé **caractérisé en ce qu'**il comporte les étapes suivantes :
- mesure d'au moins deux paramètres de la pression du compartiment de turbomachine dont une pression mesurée et une variation temporelle de pression,
- détection d'une fuite de fluide à haute température lorsqu'au moins l'un des deux paramètres de la pression du compartiment de turbomachine (10) atteint une valeur seuil caractéristique d'une fuite de fluide à haute température dans le compartiment.

2. Procédé de détection de fuite selon la revendication 1, dans lequel la pression mesurée sélectionnée dans le groupe comportant une pression absolue du compartiment de turbomachine, une pression relative du compartiment de turbomachine par rapport à la pression atmosphérique, et une pression différentielle représentative de la différence entre la pression dans le compartiment et la pression d'une zone de référence, la détection d'une fuite ayant lieu lorsque la pression mesurée dans le compartiment de turbomachine atteint une valeur seuil de pression caractéristique d'une fuite de fluide à haute température dans le compartiment.

3. Procédé de détection de fuite selon la revendication 1 ou 2, dans lequel la détection d'une fuite a lieu lorsque la variation temporelle de pression du compartiment de turbomachine atteint une valeur seuil de variation caractéristique d'une fuite de fluide à haute température dans le compartiment.

4. Procédé de détection de fuite selon l'une quelconque des revendications 1 à 3, dans lequel en fonctionnement de la turbomachine, ledit compartiment est isolé de façon étanche par rapport au fluide distribué par l'au moins une canalisation (14, 15) de distribution du fluide.

5. Procédé de détection de fuite selon l'une quelconque des revendications 1 à 4 destiné à être mis en oeuvre sur un aéronef comportant au moins une deuxième turbomachine, dans lequel ledit au moins un paramètre de la pression du compartiment est issu d'une comparaison de pression vis-à-vis de la deuxième turbomachine, la détection de fuite ayant lieu lorsqu'il résulte de la comparaison que la pression du compartiment devient supérieure d'une valeur seuil à celle d'un compartiment de la deuxième turbomachine, ladite valeur seuil étant caractéristique d'une fuite de fluide à haute température dans le compartiment de la première turbomachine.

6. Procédé de détection de fuite selon l'une quelconque des revendications 1 à 5, comprenant une étape supplémentaire de :
- fermeture de ladite au moins une canalisation (14, 15) de distribution du fluide si une fuite est détectée.

7. Procédé de détection de fuite selon l'une quelconque des revendications 1 à 6, dans lequel le compartiment de turbomachine est situé radialement entre un carter de soufflante (12) et un capot d'une nacelle (13) de la turbomachine (10).

8. Procédé de détection de fuite selon l'une quelconque des revendications 1 à 7, dans lequel le fluide à haute température est de l'air issu d'un compresseur de la turbomachine (10), la turbomachine comportant une première et une deuxième canalisation (14, 15) de distribution du fluide, la première canalisation (14) étant une canalisation pour distribuer l'air à l'aéronef et à un démarreur (122) de la turbomachine (10), la deuxième canalisation (15) étant une canalisation pour distribuer l'air au niveau d'un manche d'entrée d'air (131) de la turbomachine (10) afin d'alimenter un système de dégivrage, la première et la deuxième canalisation étant au moins en partie logées dans le compartiment.

9. Procédé de détection de fuite selon l'une quelconque des revendications 1 à 8, dans lequel ladite turbomachine (10) comporte au moins deux canalisation (14, 15) de distribution du fluide adaptée pour distribuer le fluide à haute température, ces deux canalisations (14, 15) de distribution étant au moins en partie logées dans le compartiment de turbomachine, le procédé comprenant une étape supplémentaire de fermeture de toutes les canalisations (14, 15) de distribution de fluide à haute température si une fuite de fluide est détectée.

10. Système de distribution de fluide à haute température pour turbomachine d'aéronef, le système comportant :
- une source de fluide à haute température pressurisé,
- au moins une canalisation (14, 15) de distribution du fluide à haute température adaptée pour distribuer ledit fluide à différentes parties de la turbomachine et/ou de l'aéronef qui est destiné à être équipé de ladite turbomachine,
- un compartiment de turbomachine dans lequel la canalisation de distribution est au moins en partie logée, ledit compartiment présentant en fonctionnement de la turbomachine une pression inférieure à celle du fluide à haute température,
- au moins un moyen de mesure (121) adapté pour permettre la mesure d'au moins deux paramètres de la pression du compartiment de la turbomachine dont une pression mesurée et une variation temporelle de pression,
- une unité de traitement agencée pour recevoir des données de mesures réalisées par le moyen de mesure (121),
le système de distribution de fluide étant **caractérisé en ce que** l'unité de traitement est configurée pour détecter une fuite fluide à haute température lorsqu'au moins l'un des deux paramètres de la pression du compartiment obtenus à partir du moyen de mesure (121) atteint une valeur seuil caractéristique d'une fuite de fluide à haute température dans le compartiment.

11. Système de distribution de fluide selon la revendication 10, dans lequel ledit compartiment est isolé de façon étanche par rapport au fluide distribué par l'au moins une canalisation (14, 15) qui y est au moins en partie logée, et présente un volume intérieur qui est supérieur à deux fois le volume total de la partie de l'au moins une canalisation (14, 15) qui est logée dans le compartiment.

12. Système de distribution de fluide selon la revendication 10 ou 11, dans lequel ledit compartiment est fermé et renferme un volume d'air qui est supérieur à deux fois le volume total de la partie de l'au moins une canalisation (14, 15) qui est logée dans le compartiment.

13. Système de distribution de fluide selon l'une quelconque des revendications 10 à 12, dans lequel ledit compartiment comprend au moins un élément en matériau(x) composite(s) à tenue en température insuffisante pour supporter la haute température du fluide au-delà d'un délai prédéterminé inférieur à 30 secondes.

14. Système de distribution de fluide selon la revendication 13, dans lequel ledit élément en matériau(x) composite(s) est constitué par une paroi du compartiment adjacente à un volume d'air dans lequel passe l'au moins une canalisation (14, 15) de distribution du fluide à haute température.

15. Turbomachine comportant un système de distribution de fluide selon l'une quelconque des revendications 10 à 14.

## Patentansprüche

1. Verfahren zur Erkennung von Hochtemperaturfluid-Lecks in einer Turbomaschine (10) von Luftfahrzeugen, wobei diese Turbomaschine (10) aufweist:
- eine Quelle für Hochtemperaturfluid unter Druck,
- mindestens eine Leitung (14, 15) zur Verteilung des Fluid, die geeignet ist, dieses Hochtemperaturfluid an verschiedene Bereiche der Turbomaschine (10) und/oder des Luftfahrzeugs (20), das mit dieser Turbomaschine (10) ausgerüstet werden soll, zu verteilen,
- einen abgeteilten Raum der Turbomaschine (10), in dem die Verteilerleitung (14, 15) zumindest teilweise Aufnahme findet, wobei dieser abgeteilte Raum in Betrieb einen Druck aufweist, der geringer ist als der des Hochtemperaturfluids,
**dadurch gekennzeichnet,**
**dass** es die folgenden Verfahrensschritte umfasst:
- Messung von mindestens zwei Parametern des Drucks des abgeteilten Raums der Turbomaschine, davon ein gemessener Druck und eine zeitliche Änderung des Drucks,
- Erkennung eines Hochtemperaturfluid-Lecks, wenn wenigstens einer der beiden Parameter des Drucks des abgeteilten Raums der Turbomaschine (10) einen Schwellenwert erreicht, der charakteristisch für ein Hochtemperaturfluid-Leck in dem abgeteilten Raum ist.

2. Verfahren zur Erkennung von Lecks nach Anspruch 1, bei dem der gemessene Druck ausgewählt wird unter einem absoluten Druck des abgeteilten Raums der Turbomaschine, einem relativen Druck des abgeteilten Raums der Turbomaschine, bezogen auf den atmosphärischen Druck, und einem Differenzdruck, der die Differenz zwischen dem Druck in dem abgeteilten Raum und dem Druck in einem Referenzbereich darstellt, wobei die Erkennung eines Lecks erfolgt, wenn der gemessene Druck in dem abgeteilten Raum der Turbomaschine einen DruckSchwellenwert erreicht, der charakteristisch für ein Hochtemperaturfluid-Leck in dem abgeteilten Raum ist.

3. Verfahren zur Erkennung von Lecks nach Anspruch 1 oder 2, bei dem die Erkennung eines Lecks erfolgt, wenn die zeitliche Änderung des Drucks in dem abgeteilten Raum der Turbomaschine einen Änderungs-Schwellenwert erreicht, der charakteristisch für ein Hochtemperaturfluid-Leck in dem abgeteilten Raum ist.

4. Verfahren zur Erkennung von Lecks nach einem der Ansprüche 1 bis 3, wobei in Betrieb der Turbomaschine der genannte abgeteilte Raum gegen das durch mindestens eine Fluid-Verteilerleitung (14, 15) verteilte Fluid dicht isoliert ist.

5. Verfahren zur Erkennung von Lecks nach einem der Ansprüche 1 bis 4, das dazu bestimmt ist, in einem Luftfahrzeug zum Einsatz zu kommen, das mindestens eine zweite Turbomaschine enthält, wobei der genannte mindestens eine Parameter des Drucks des abgeteilten Raums aus einem Druckvergleich zu der zweiten Turbomaschine hervorgeht, wobei die Erkennung eines Lecks erfolgt, wenn aus dem Vergleich hervorgeht, dass der Druck des abgeteilten Raums um einen Schwellenwert höher steigt als der eines abgeteilten Raums der zweiten Turbomaschine, wobei dieser Schwellenwert charakteristisch für ein Hochtemperaturfluid-Leck in dem abgeteilten Raum der ersten Turbomaschine ist.

6. Verfahren zur Erkennung von Lecks nach einem der Ansprüche 1 bis 5, das einen zusätzlichen Verfahrensschritt aufweist, und zwar:
- Schließen der genannten mindestens einen Leitung (14, 15) zur Verteilung des Fluid, falls ein Leck erkannt wird.

7. Verfahren zur Erkennung von Lecks nach einem der Ansprüche 1 bis 6, wobei der abgeteilte Raum der Turbomaschine radial zwischen einem Gebläsegehäuse (12) und einer Haube einer Turbinengondel (13) der Turbomaschine (10) angeordnet ist.

8. Verfahren zur Erkennung von Lecks nach einem der Ansprüche 1 bis 7, wobei das Hochtemperaturfluid Luft ist, die aus einem Verdichter der Turbomaschine (10) kommt, wobei die Turbomaschine eine erste und eine zweite Leitung (14, 15) zur Verteilung des Fluid aufweist, wobei die erste Leitung (14) eine Leitung zur Verteilung der Luft in dem Luftfahrzeug und an einen Anlasser (122) der Turbomaschine (10) ist, wobei die zweite Leitung (15) eine Leitung zur Verteilung der Luft im Bereich eines Lufteinlassansatzes (131) der Turbomaschine (10) ist, um ein Enteisungssystem zu speisen, wobei die erste und die zweite Leitung wenigstens zum Teil in dem abgeteilten Raum aufgenommen sind.

9. Verfahren zur Erkennung von Lecks nach einem der Ansprüche 1 bis 8, wobei die genannte Turbomaschine (10) mindestens zwei Leitungen (14, 15) zur Verteilung des Fluid aufweist, die geeignet sind, das Hochtemperaturfluid zu verteilen, wobei diese beiden Verteilerleitungen (14, 15) wenigstens zum Teil in dem abgeteilten Raum der Turbomaschine aufgenommen sind, wobei das Verfahren einen zusätzlichen Verfahrensschritt des Schließens aller Leitungen (14, 15) zur Verteilung des Fluid, falls ein Leck erkannt wird, enthält.

10. System zur Verteilung von Hochtemperaturfluid für Turbomaschinen von Luftfahrzeugen, wobei das System umfasst:
- eine Quelle für Hochtemperaturfluid unter Druck,
- mindestens eine Leitung (14, 15) zur Verteilung des Hochtemperaturfluid, die geeignet ist, dieses Fluid an verschiedene Bereiche der Turbomaschine und/oder des Luftfahrzeugs, das mit dieser Turbomaschine ausgerüstet werden soll, zu verteilen,
- einen abgeteilten Raum der Turbomaschine, in dem die Verteilerleitung zumindest teilweise aufgenommen ist, wobei dieser abgeteilte Raum in Betrieb der Turbomaschine einen Druck aufweist, der geringer ist als der des Hochtemperaturfluid,
- mindestens ein Messmittel (121), das geeignet ist, die Messung von mindestens zwei Parametern des Drucks des abgeteilten Raums der Turbomaschine zu ermöglichen, davon ein gemessener Druck und eine zeitliche Änderung des Drucks,
- eine Datenverarbeitungseinheit, die dazu vorgesehen ist, Messdaten von dem Messmittel (121) zu empfangen,
**dadurch gekennzeichnet, dass** die Datenverarbeitungseinheit dazu konfiguriert ist, ein Hochtemperaturfluid-Leck zu erkennen, wenn mindestens einer der beiden Parameter des Drucks des abgeteilten Raums, die von dem Messmittel (121) empfangen werden, einen Schwellenwert erreicht, der charakteristisch für ein Hochtemperaturfluid-Leck in dem abgeteilten Raum ist.

11. System zur Verteilung von Fluid nach Anspruch 10, bei dem der genannte abgeteilte Raum gegen das durch mindestens eine Leitung (14, 15) verteilte Fluid dicht isoliert ist, wobei diese Leitung darin zumindest teilweise aufgenommen ist, und ein Innenvolumen aufweist, das größer ist als das Zweifache des Gesamtvolumens des Teils der mindestens einen Leitung (14, 15), der in dem abgeteilten Raum aufgenommen ist.

12. System zur Verteilung von Fluid nach Anspruch 10 oder 11, bei dem dieser abgeteilte Raum geschlossen ist und ein Luftvolumen umschließt, das größer ist als das Zweifache des Gesamtvolumens des Teils der mindestens einen Leitung (14, 15), der in dem abgeteilten Raum aufgenommen ist.

13. System zur Verteilung von Fluid nach einem der Ansprüche 10 bis 12, bei dem dieser abgeteilte Raum mindestens ein Element aus Verbundmaterial(en) mit nicht ausreichender Temperaturbeständigkeit, um der hohen Temperatur des Fluid über einen vorbestimmten Zeitraum von weniger als 30 Sekunden standzuhalten, enthält.

14. System zur Verteilung von Fluid nach Anspruch 13, bei dem das genannte Element aus Verbundmaterial(en) von einer Wand des abgeteilten Raums gebildet wird, die an ein Luftvolumen angrenzt, in das die mindestens eine Leitung (14, 15) zur Verteilung des Hochtemperaturfluid führt.

15. Turbomaschine, die ein System zur Verteilung von Fluid nach einem der Ansprüche 10 bis 14 aufweist.

## Claims

1. A leak detecting method of a high temperature fluid in an aircraft turbomachine (10), said turbomachine (10) including:
- a pressurised high temperature fluid source,
- at least one fluid distribution line (14, 15) suitable for distributing said high temperature fluid to different parts of the turbomachine (10) and/or the aircraft (20) which are intended to be equipped with said turbomachine (10),
- a turbomachine zone (10) in which the distribution line (14, 15) is at least partly housed, said zone having in use a pressure lower than that of the high temperature fluid,
the method being **characterized in that** it comprises the following steps of:
- measuring at least two pressure parameters of the turbomachine zone including a measured pressure and a pressure variation over time,
- detecting a high temperature fluid leak when at least one of both pressure parameters of the turbomachine zone (10) reaches a threshold value characteristic of a high temperature fluid leak in the zone.

2. The leak detecting method according to claim 1, wherein the measured pressure is selected from the group including an absolute pressure of the turbomachine zone, a relative pressure of the turbomachine zone with respect to the atmospheric pressure, and a differential pressure representative of the difference between the pressure in the zone and the pressure of a reference area, detecting a leak occurring when the pressure measured in the turbomachine zone reaches a pressure threshold value characteristic of a high temperature fluid leak in the zone.

3. The leak detecting method according to claim 1 or 2, wherein detecting a fluid occurs when the pressure variation over time of the turbomachine zone reaches a variation threshold value characteristic of a high temperature fluid leak in the zone.

4. The leak detecting method according to any of claims 1 to 3, wherein in use of the turbomachine, said zone is sealingly insulated with respect to the fluid distributed by the at least one fluid distribution line (14, 15).

5. The leak detecting method according to any of claims 1 to 4, intended to be implemented on an aircraft including at least one second turbomachine, wherein said at least one pressure parameter of the zone comes from a pressure comparison to the second turbomachine, the leak detection occurring when it results from the comparison that the zone pressure becomes higher by a threshold value than that of a zone of the second turbomachine, said threshold value being characteristic of a high temperature fluid leak in the zone of the first turbomachine.

6. The leak detecting method according to any of claims 1 to 5, comprising a further step of:
- closing said at least one fluid distribution line (14, 15) if a leak is detected.

7. The leak detecting method according to any of claims 1 to 6, wherein the turbomachine zone is radially located between a fan casing (12) and a cowling of a nacelle (13) of the turbomachine (10).

8. The leak detecting method according to any of claims 1 to 7, wherein the high temperature fluid is air coming from a compressor of the turbomachine (10), the turbomachine including a first and a second fluid distribution line (14, 15), the first line (14) being a line for distributing air to the aircraft and a starter (122) of the turbomachine (10), the second line (15) being a line for distributing air at an air intake duct (131) of the turbomachine (10) in order to feed an anti-icing system, the first and the second line being at least partly housed in the zone.

9. The leak detecting method according to any of claims 1 to 8, wherein said turbomachine (10) includes at least two fluid distribution lines (14, 15) suitable for distributing the high temperature fluid, both these distribution lines (14, 15) being at least partly housed in the turbomachine zone, the method including a further step of closing all the high temperature fluid distribution lines (14, 15) if a fluid leak is detected.

10. A high temperature fluid distribution system for an aircraft turbomachine, the system including:
- a pressurised high temperature fluid source,
- at least one high temperature fluid distribution line (14, 15) suitable for distributing said fluid to different parts of the turbomachine and/or the aircraft which is intended to be equipped with said turbomachine,
- a turbomachine zone in which the distribution line is at least partly housed, said zone having in use of the turbomachine a pressure lower than that of the high temperature fluid,
- at least one measuring means (121) suitable for enabling two pressure parameters of the turbomachine zone including a measured pressure and a pressure variation over time to be measured,
- a processing unit arranged to receive data from measurements made by the measuring means (121),
the fluid distribution system being **characterised in that** the processing unit is configured to detect a high temperature fluid leak when at least one of both pressure parameters of the zone obtained from the measuring means (121) reaches a threshold value characteristic of a high temperature fluid leak in the zone.

11. The fluid distribution system according to claim 10, wherein said zone is sealingly insulated with respect to the fluid distributed by the at least one line (14, 15) which is at least partly housed therein, and has an internal volume which is higher than twice the total volume of the part of the at least one line (14, 15) which is housed in the zone.

12. The fluid distribution system according to claim 10 or 11, wherein said zone is closed and contains an air volume which is higher than twice the total volume of the part of the at least one line (14, 15) which is housed in the zone.

13. The fluid distribution system according to any of claims 10 to 12, wherein said zone comprises at least one element of composite material(s) with a temperature resistance insufficient to withstand the fluid high temperature beyond a predetermined delay lower than 30 seconds.

14. The fluid distribution system according to claim 13, wherein said element of composite material(s) consists of a zone wall adjacent to an air volume through which the at least one high temperature fluid distribution line (14, 15) passes.

15. A turbomachine including a fluid distribution system according to any of claims 10 to 14.
